# EUROPÄISCHE PATENTSCHRIFT

(11) **EP 4 140 933 B1**
(45) Veröffentlichungstag und Bekanntmachung des Hinweises auf die Patenterteilung: **03.07.2024**
(21) Anmeldenummer: 22185835.0
(22) Anmeldetag: 19.07.2022
(51) Int. Cl.: B66C 23/64, B66C 23/68

(54) **GELENKAUSLEGER, ARBEITSMASCHINE, VERFAHREN ZUR HERSTELLUNG EINES ZWISCHENSTÜCKS FÜR EINEN GELENKAUSLEGER UND VERWENDUNG EINES GELENKAUSLEGERS**
ARTICULATED BOOM, WORKING MACHINE, METHOD FOR MANUFACTURING AN INTERMEDIATE PIECE FOR AN ARTICULATED BOOM AND USE OF AN ARTICULATED BOOM
FLÈCHE ARTICULÉE, MACHINE DE TRAVAIL, PROCÉDÉ DE FABRICATION D'UNE PIÈCE INTERMÉDIAIRE POUR UNE FLÈCHE ARTICULÉE ET UTILISATION D'UNE FLÈCHE ARTICULÉE

(30) Priorität: 24.08.2021 US 202117410738
(43) Veröffentlichungstag der Anmeldung: 01.03.2023
(60) Teilanmeldung: 23197587.1
(73) Patentinhaber: Sennebogen Maschinenfabrik GmbH, 94315 Straubing (DE)
(72) Erfinder: Sennebogen, Erich, 94315 Straubing (DE)
(74) Vertreter: advotec.

(56) Entgegenhaltungen:
- EP-B1- 3 656 208
- WO-A1-2012/156808
- WO-A1-2019/123145
- CN-A- 112 081 382
- FR-A1- 2 580 777

## Beschreibung

Die Erfindung betrifft einen Gelenkausleger, insbesondere für eine Arbeitsmaschine. Ferner betrifft die Erfindung eine Arbeitsmaschine, insbesondere Holzvollernter, umfassend einen Gelenkausleger. Gelenkausleger sind aus der Praxis bekannt und finden ihre Verwendung beispielsweise bei Kranen, Baggern, Materialumschlagsmaschinen oder dergleichen.

Aus der Druckschrift KR 100 559 237 B1 ist eine Arbeitsmaschine mit einem Gelenkausleger gekannt, der einen ersten Abschnitt, einen zweiten Abschnitt und ein Zwischenstück zwischen dem ersten Abschnitt und dem zweiten Abschnitt umfasst, das aus einem Glasfaserwerkstoff bestehen kann, um einen Leichtbau zu ermöglichen.

Aus der Druckschrift WO 2019/123 145 A1 ist ein Kran bekannt, der im Säulenbereich einen Abschnitt aufweisen kann, der aus einem faserverstärkten Kunststoff gebildet ist.

Aus der Druckschrift FR 2 580 777 ist es bekannt, einen Gelenkausleger einer Arbeitsmaschine abschnittsweise aus faserverstärktem Kunststoff herzustellen.Nachteilig bei den bekannten Arbeitsmaschinen ist, dass bei Arbeiten in der Nähe von Spannungs- bzw. Hochspannungsleitungen eine Stromführung der Leitungen unterbrochen werden muss, um das die Arbeitsmaschine bedienende Personal nicht zu gefährden, sollte der Gelenkausleger der Arbeitsmaschine mit den Leitungen in Kontakt geraten.

Der Erfindung liegt daher die Aufgabe zugrunde, einen Gelenkausleger vorzusehen, bei dem Arbeiten mit einer Arbeitsmaschine in der Nähe von Spannungs- bzw. Hochspannungsleitungen ermöglicht werden, ohne das die Arbeitsmaschine bedienende Personal zu gefährden und ohne die Arbeitsmaschine zu beschädigen.

Diese Aufgabe ist erfindungsgemäß durch den Gelenkausleger mit den Merkmalen des Anspruchs 1 gelöst. Ferner wird die Aufgabe durch die Arbeitsmaschine mit den Merkmalen des Anspruchs 6 gelöst. Es wird also ein Gelenkausleger, insbesondere für eine Arbeitsmaschine, vorgeschlagen, wobei der Gelenkausleger mindestens zwei Schenkel umfasst, wobei mindestens einer der Schenkel einen ersten Abschnitt, einen zweiten Abschnitt und ein den ersten Abschnitt mit dem zweiten Abschnitt verbindendes elektrisch isolierendes Zwischenstück umfasst. Das Zwischenstück ist mit dem ersten Abschnitt und dem zweiten Abschnitt starr verbunden. Das Zwischenstück umfasst Glasfasern, wobei die Glasfasern mit einer Kunststoffmatrix vergossen sind. Mit anderen Worten bilden die Glasfasern, die mit der Kunststoffmatrix vergossen sind, einen glasfaserverstärkten Kunststoff (GFK) aus.

Durch das Vorsehen des eben beschriebenen elektrisch isolierenden Zwischenstücks ist es möglich, Arbeiten in der Nähe von Spannungs- bzw. Hochspannungsleitungen zu ermöglichen, ohne dabei die Stromzufuhr zu unterbrechen, ohne das die Arbeitsmaschine bedienende Personal zu gefährden und ohne die Arbeitsmaschine zu beschädigen.

Der erste Abschnitt kann als ein erster Schenkelabschnitt verstanden werden. Vorzugsweise ist der erste Abschnitt aus Metall, insbesondere Stahl. Der zweite Abschnitt kann als ein zweiter Schenkelabschnitt verstanden werden. Vorzugsweise ist der zweite Abschnitt aus Metall, insbesondere Stahl. Das Zwischenstück kann als ein Isolator oder als ein weiterer Schenkelabschnitt verstanden werden.

Vorzugsweise ist ein erster Schenkel drehbar an einem Oberwagen einer Arbeitsmaschine angeordnet. Bevorzug ist ein zweiter Schenkel drehbar am ersten Schenkel angeordnet. Besonders bevorzugt weist der erste Schenkel, der zweite Schenkel oder beide Schenkel das Zwischenstück auf.

Vorzugsweise umfasst das Zwischenstück einen Kern, der von den Glasfasern umwickelt ist. Bevorzugt ist der Kern von den Glasfasern bzw. dem glasfaserverstärkten Kunststoff mantelseitig umgeben bzw. umwickelt.

Bevorzugt besteht der Kern aus Schaumglas oder dergleichen. Weiter bevorzugt hat der Kern eine Rohdichte im Bereich von 100 bis 165 kg/m³. Alternativ kann der Kern aus miteinander verklebten Platten bestehen, wobei diese Platten aus Schaumglas sein können.

Glasfaserverstärkter Kunststoff ist ein Faser-Kunststoff-Verbund aus einem Kunststoff und Glasfasern. Als Basis für den glasfaserverstärkten Kunststoff kommen duroplastische Kunststoffe, thermoplastische Kunststoffe und/oder Elastomere in Frage. Als duroplastische Kunststoffe können Polyesterharz, Epoxidharz oder dergleichen verwendet werden. Als thermoplastische Kunststoffe kann beispielsweise Polyamid oder dergleichen verwendet werden.

Vorzugsweise werden beim glasfaserverstärkten Kunststoff Fasern, welche die nötige Festigkeit aufweisen, mit einer Kunststoffmatrix verbunden, welche als Träger für die Fasern dient. Glasfaserverstärkte Kunststoffe haben ein sehr gutes elektrisches Isolationsvermögen und auch eine hohe Korrosionsbeständigkeit. Vorzugsweise weisen die Glasfasern einen hohen spezifischen elektrischen Widerstand auf, der zwischen 10¹⁴ und 10¹⁵ Ωmm²/m liegen kann. Die Glasfasern sind deshalb zur elektrischen Isolation sehr gut geeignet. Bevorzugt sind mittels des elektrisch isolierenden Zwischenstücks Wechselspannungen im Bereich von bis zu 1000 KV aufnehmbar/ableitbar.

Überdies verfügen glasfaserverstärkte Kunststoffe über ein ausgezeichnetes Korrosionsverhalten, sogar in aggressiver Umgebung und eignen sich daher als idealer Werkstoff. Hinzu kommen eine hohe chemische Beständigkeit und gute Formstabilität.

Vorzugsweise werden die Glasfasern durch Ziehen von Glasfäden hergestellt. Dabei wird zunächst Glas geschmolzen und durch Spinndüsen geleitet. Anschließend werden die zähflüssigen Glasfäden zu Glasfasern gezogen. Die Glasfaser ist die einzige isotrope Verstärkungsfaser. Das heißt die Materialeigenschaften sind richtungsunabhängig. Vorteile der Glasfaser sind die hohe Längs-Zug- und Längs-Druckfestigkeit, die hohe Bruchdehnung und die sehr gute thermische und elektrische Isolationsfähigkeit. Ferner sind sie preisgünstig und einfach zu verarbeiten.

Bevorzugt übernimmt die Matrix im Faser-Matrix-System sowohl faserschützende als auch kraftaufnehmende Funktionen, wie zum Beispiel die Fixierung der Fasern, die Formgebung des Bauteils und den Widerstand gegen Schubknicken der Fasern bei Druckbeanspruchung. Außerdem schützt die Faser vor Umgebungseinflüssen und vor Reibung zwischen den Fasern. Ferner übernimmt die Matrix die Kraftverteilung zwischen den Fasern und UD-Schichten, die Kraftaufnahme bei Belastung in Faserquerrichtung und die Aufnahme von Schubkräften. Ferner wirkt sie als Rissstopper bei zähem Matrixsystem. Die Festigkeitskennwerte des Matrixmaterials sind verglichen mit dem Fasermaterial viel geringer. Wie oben bereits erwähnt, bieten sich vor allem polymere Matrixsysteme, wie Duroplaste, Thermoplaste und Elastomere an.

Besonders bevorzugt ist eine Wandstärke der Glasfasern, die mit der Kunststoffmatrix vergossen sind, im Bereich zwischen 20mm bis 50mm. In diesem Bereich haben sich in Tests Wechselspannungen im Bereich von bis zu 1000 KV aufnehmen/ableiten lassen.

Bei einer bevorzugten Ausführungsform des Gelenkauslegers weist das Zwischenstück einen ersten und einen zweiten endseitigen Bereich auf, wobei der erste endseitige Bereich teilweise in den ersten Abschnitt eingeführt ist und der zweite endseitige Bereich teilweise in den zweiten Abschnitt eingeführt ist. Beide Abschnitte sind ausgebildet, die endseitigen Bereiche des Zwischenstücks aufzunehmen.. Hierdurch ist es möglich, das Zwischenstück passgenau in die beiden Abschnitte einzubringen.

Vorzugsweise sind die jeweils in den ersten Abschnitt und in den zweiten Abschnitt eingeführten endseitigen Bereiche des Zwischenstücks mit dem ersten Abschnitt und dem zweiten Abschnitt verklebt. Mit anderen Worten wird das Zwischenstück von beiden Seiten in die Abschnitte geschoben und anschließend die Flächen von Inlay und den Abschnitten miteinander verklebt. Ferner ist die Montage mittels der Klebeverbindung einfach zu realisieren.

Für das Verbinden des elektrisch isolierenden Zwischenstücks mit Metallen, Aluminium, Edelstahl oder Stahl bieten sich beispielsweise 2-Komponentenklebstoffe auf Acrylat- oder Epoxidharzbasis an. Weitere Klebstoffe sind denkbar. Im Gegensatz zum Schrauben werden die Kräfte nicht punktuell, sondern ohne Verletzung der Faserverstärkung flächig in das Bauteil eingeleitet.

In einer weiteren bevorzugten Ausführungsform des Gelenkauslegers sind die jeweils in den ersten Abschnitt und in den zweiten Abschnitt eingeführten endseitigen Bereiche des Zwischenstücks mittels Verbindungsmitteln mit dem ersten Abschnitt und dem zweiten Abschnitt verbunden.

Vorzugsweise erfolgt eine Verbindung mittels Schrauben, einer Schraubverbindung, insbesondere Schraube-Mutter-Verbindung sowie mittels Gewindestangen oder Bolzen. Dabei wird das Zwischenstück, wie oben beschrieben, beidseitig in die beiden Abschnitte eingeschoben und die beiden Abschnittenden mit dem Inlay verschraubt. Ein Vorteil dieser Anbindung ist die Kompaktheit der Konstruktion. Gleichwohl müssen sich auch die Abmessungen des Schenkels nicht ändern. Vorzugsweise können bei den Verschraubungen Stahlhülsen mit Innengewinde im Zwischenstück eingebracht werden.

Besonders bevorzugt sind endseitig am Zwischenstück Verstärkungsplatten oder -bleche am oder im Zwischenstück angeordnet. Dabei können die Verstärkungsplatten oder -bleche auf die mittels der Kunststoffmatrix vergossenen Glasfasern aufgesetzt werden oder sie können vor dem Umwickeln mit den Glasfasern auf dem Kern des Zwischenstücks aufgesetzt werden.

Bei dem Gelenkausleger nach der Erfindung weist das Zwischenstück an einem ersten Ende einen ersten Flansch und an einem zweiten Ende einen zweiten Flansch auf, wobei der erste Abschnitt einen dritten Flansch und der zweite Abschnitt einen vierten Flansch aufweist, und wobei der erste Flansch mit dem dritten Flansch und der zweite Flansch mit dem vierten Flansch kraftschlüssig verbunden ist. Dabei ist das Zwischenstück zwischen beiden Abschnitten angeordnet.

Mit anderen Worten soll mittels Flanschplatten an beiden Seiten des Zwischenstücks eine Verschraubung mit den beiden Abschnitten des Schenkels erfolgen. Vorzugsweise erfolgt eine Verbindung der miteinander in Verbindung stehenden Flansche mittels Schrauben, einer Schraubverbindung, insbesondere Schraube-Mutter-Verbindung, mittels Gewindestangen oder Bolzen. Sämtliche Flanschplatten können aus Metall sein, insbesondere Stahl oder Edelstahl.

Alternativ könnten die Schrauben bereits bei der Fertigung in das Zwischenstück eingebracht werden, so dass die zusätzliche Flanschplatte entfallen könnte.

Vorzugsweise umfasst der erste Flansch erste Stege oder auskragende Bereiche und der zweite Flansch zweite Stege oder Stegbereiche, wobei der erste Flansch und der zweite Flansch jeweils endseitig am Kern angeordnet bzw. aufgesetzt oder aufgesteckt sind. Dabei sind neben dem Kern auch die ersten und zweiten Stege der Flansche von den Glasfasern umwickelt. Hierdurch ist es möglich, sowohl die ersten Flansche als auch die zweiten Flansche am Kern zu fixieren, um so ein Zwischenstück zu erhalten, das beidseitig Flansche aufweist.

Die ersten Stege und die zweiten Stege können auskragende Bereiche sein. Die ersten und die zweiten Stege können eingerichtet sein, auf eine Mantelfläche des Kerns aufgesetzt oder aufgesteckt zu werden oder auf der Mantelfläche des Kerns angeordnet zu werden.

Ferner wird eine Arbeitsmaschine, insbesondere Holzvollernter, vorgeschlagen, umfassend einen Gelenkausleger, wie oben beschrieben. Infolge einer Verwendung des elektrisch isolierenden Zwischenstücks ist es möglich, Arbeiten der Arbeitsmaschine in der Nähe von Spannungs- bzw. Hochspannungsleitungen zu ermöglichen, ohne die Stromführung zu unterbrechen.

Bei einer bevorzugten Ausführungsform der Arbeitsmaschine umfasst die Arbeitsmaschine einen Fällgreifer, wobei der Fällgreifer am Gelenkausleger, insbesondere am zweiten Schenkel, angeordnet ist.

Unter einem Fällgreifer kann ein Manipulator oder eine Vorrichtung verstanden werden, die eine Greifvorrichtung und eine Fällvorrichtung umfasst. Mittels der Greifvorrichtung lässt sich beispielsweise ein Baum bzw. ein Baumstamm greifen bzw. festhalten, wohingegen mittels der Fällvorrichtung eine Fällung bzw. ein Abschneiden des Baumes bzw. Baumstamms ermöglicht wird.

Die Fällvorrichtung kann beispielsweise eine Schere oder ein Schnittwerkzeug umfassen. Die Greifvorrichtung kann beispielsweise einen zangen- oder gabelförmigen Greifer umfassen.

Darüber hinaus wird ein Verfahren zur Herstellung eines Zwischenstücks für mindestens einen Schenkel eines Gelenkauslegers vorgeschlagen, die nachfolgenden Schritte umfassend:
- Umwickeln eines Kerns mit Glasfasern und
- Vergießen der Glasfasern mit einer Kunststoffmatrix.

Bei einer bevorzugten Ausführungsform umfasst das Verfahren den weiteren Schritt:
- Einbringen von Bohrungen in das Zwischenstück.

Überdies wird ein weiteres Verfahren zur Herstellung eines Zwischenstücks für mindestens einen Schenkel eines Gelenkauslegers vorgeschlagen, umfassend die nachfolgenden Schritte:
- endseitiges Aufsetzen jeweils eines Flansches mit einem Kern, wobei die Flansche Stege aufweisen,
- Umwickeln des Kerns und der Stege mit Glasfasern und
- Vergießen der Glasfasern mit einer Kunststoffmatrix.

Bei einer weiter bevorzugten Ausführungsform des Verfahrens umfasst das Verfahren den weiteren Schritt:
- Entfernen des Kerns.

Eine Entfernung des Kerns ist nach einem Verguss der Glasfasern mit der Kunststoffmatrix möglich.

Außerdem wird eine Verwendung eines Gelenkauslegers für eine Arbeitsmaschine, insbesondere Holzvollernter, vorgeschlagen, umfassend einen Fällgreifer, wobei der Fällgreifer am Gelenkausleger, insbesondere am zweiten Schenkel, angeordnet ist.

Unter einem Vollholzernter kann ein Harvester verstanden werden.

Weitere Vorteile und vorteilhafte Ausgestaltungen des Gegenstands der Erfindung sind der Beschreibung, den Zeichnungen und den Patentansprüchen entnehmbar.

Ausführungsbeispiele der Erfindung sind in den Zeichnungen schematisch vereinfacht dargestellt und werden in der nachfolgenden Beschreibung näher erläutert.

Es zeigen:
- Fig. 1:: eine Ausführungsform einer Arbeitsmaschine;
- Fig. 2:: eine Ansicht einer ersten Ausführungsform eines ersten Schenkels eines nicht von der Erfindung erfassten Gelenkauslegers der Arbeitsmaschine;
- Fig. 3:: einen Längsschnitt durch den ersten Schenkel aus Fig. 2;
- Fig. 4:: eine Ansicht eines Zwischenstücks des ersten Schenkels aus Fig. 3;
- Fig. 5:: einen Längsschnitt durch das Zwischenstück aus Fig. 4;
- Fig. 6:: einen Querschnitt A-A aus Figur 4;
- Fig. 7:: eine Ansicht einer zweiten Ausführungsform eines ersten Schenkels eines nicht von der Erfindung erfassten Gelenkauslegers der Arbeitsmaschine;
- Fig. 8:: einen Längsschnitt durch den ersten Schenkel aus Fig. 7;
- Fig. 9:: eine Ansicht eines Zwischenstücks des ersten Schenkels aus Fig. 8;
- Fig. 10:: einen Längsschnitt durch das Zwischenstück aus Fig. 9;
- Fig. 11:: einen Querschnitt B-B aus Figur 10;
- Fig. 12:: eine Ansicht eines weiteren Zwischenstücks;
- Fig. 13:: eine Ansicht einer dritten Ausführungsform eines ersten Schenkels eines erfindungsgemäßen Gelenkauslegers der Arbeitsmaschine;
- Fig. 14:: einen Längsschnitt durch den ersten Schenkel aus Fig. 13;
- Fig. 15:: eine Ansicht eines Zwischenstücks des ersten Schenkels aus Fig. 14;
- Fig. 16:: einen Längsschnitt durch das Zwischenstück aus Fig. 15;
- Fig. 17:: einen Schnitt C-C aus Figur 15;
- Fig. 18:: eine Ansicht eines alternativen Zwischenstücks aus Fig. 14;
- Fig. 19:: einen Längsschnitt durch das Zwischenstück aus Fig. 18; und
- Fig. 20:: einen Schnitt D-D aus Figur 18.

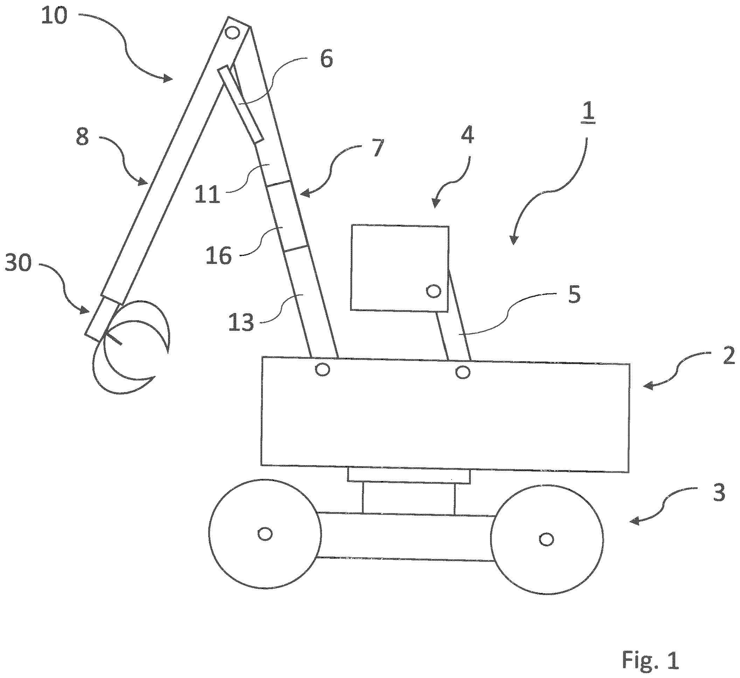

In der Figur 1 ist eine Arbeitsmaschine 1 als Holzvollernter gezeigt. Die Arbeitsmaschine 1 umfasst einen Oberwagen 2, einen Unterwagen 3, eine verfahrbare Fahrerkabine 4, einen Gelenkausleger 10 und einen Fällgreifer 30.

Der Oberwagen 2 ist drehbar auf dem Unterwagen 3 montiert. Die Fahrerkabine 4 ist mit dem Oberwagen 2 mittels eines Hubarms 5 verbunden. Der Gelenkausleger 10 ist schwenkbar mit dem Oberwagen 2 verbunden. Der Gelenkausleger 10 umfasst einen ersten Schenkel 7 und einen zweiten Schenkel 8. Der erste Schenkel 7 ist drehbar am Oberwagen 2 gelagert bzw. angeordnet. Der zweite Schenkel 8 ist drehbar am ersten Schenkel 7 gelagert bzw. angeordnet. Zur Verlagerung des zweiten Schenkels 8 relativ zum ersten Schenkel 7 ist ein Hub- und Stielzylinder 6 zwischen beiden Schenkeln 7, 8 angeordnet.

Ferner umfasst die Arbeitsmaschine einen Fällgreifer 30, der am distalen Ende des zweiten Schenkels angeordnet ist. Mit dem Fällgreifer 30 ist es einerseits möglich, beispielsweise mittels einer Greifvorrichtung des Fällgreifers 30 einen Baumstamm zu greifen und festzuhalten und andererseits mittels einer Schneid- bzw. Schervorrichtung des Fällgreifers 30 den Baumstamm zu schneiden bzw. ihn zu fällen. Vorzugswiese ist der Fällgreifer 30 im dreidimensionalen Raum in sämtliche Richtungen dreh- bzw. bewegbar.

Der in der Figur 1 gezeigte erste Schenkel 7 des Gelenkauslegers 10 umfasst einen ersten Abschnitt 11 und einen zweiten Abschnitt 13. Zwischen dem ersten Abschnitt 11 und dem zweiten Abschnitt 13 ist ein die beiden Abschnitte 11, 13 verbindendes elektrisch isolierendes Zwischenstück 16 angeordnet. Beide Abschnitte 11, 13 sind aus Metall, insbesondere Stahl.

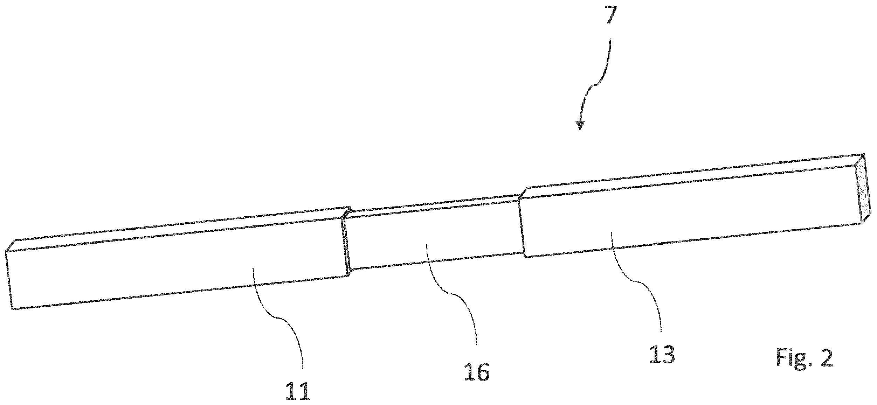

Figur 2 zeigt einen ersten Schenkel 7 des Gelenkauslegers mit dem Zwischenstück 16. Das Zwischenstück 16 ist an einem ersten endseitigen Bereich teilweise in den ersten Abschnitt 11 eingeführt und an einem zweiten endseitigen Bereich teilweise in den zweiten Abschnitt 13 eingeführt. Das Zwischenstück 16 ist mit dem ersten Abschnitt 11 und dem zweiten Abschnitt 13 starr verbunden.

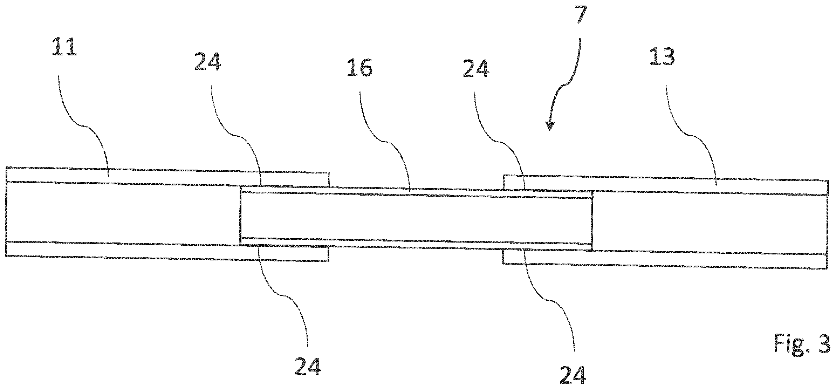

Wie in der Figur 3 gezeigt, sind die in den ersten Abschnitt 11 und in den zweiten Abschnitt 13 eingeführten endseitigen Bereiche des Zwischenstücks 16 mit dem ersten Abschnitt 11 und dem zweiten Abschnitt 13 verklebt. Hierfür wird ein Klebstoff bzw. eine Klebeverbindung 24 verwendet. Als Klebstoff eignen sich beispielsweise 2-Komponentenklebstoffe auf Acrylat- oder Epoxidharzbasis.

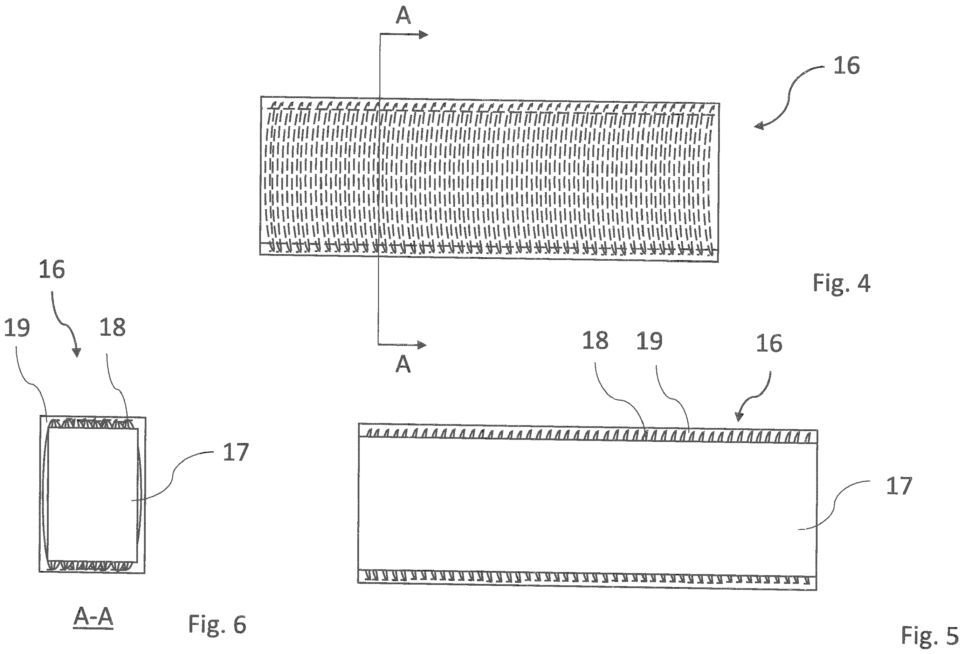

In der Figur 4 ist das Zwischenstück 16 gezeigt. Glasfasern und ein von den Glasfasern ummantelter bzw. umwickelter Kern sind als gestrichelte Linien dargestellt, da sie in der Ansicht nicht sichtbar sind.

In Figur 5 ist ein Längsschnitt durch das Zwischenstück 16 gezeigt. Das Zwischenstück 16 umfasst den Kern 17, der von den Glasfasern 18 umwickelt ist, wobei die Glasfasern 18 mit einer Kunststoffmatrix 19 vergossen sind. Mit anderen Worten bilden die Glasfasern 18, die mit der Kunststoffmatrix 19 vergossen sind, einen glasfaserverstärkten Kunststoff (GFK) aus. Figur 6 zeigt einen Schnitt A-A aus der Figur 4.

Ein Ziehen und damit ein Entfernen des Kerns 17 aus dem Zwischenstück 16 kann nach einem erfolgreichen Umwickeln des Kerns 17 mit den Glasfasern 18 und einem anschließenden Vergießen der Kunststoffmatrix 19 bedarfsweise erfolgen. Der Kern 17 kann aus Schaumglas, Schaumglasplatten oder dergleichen bestehen.

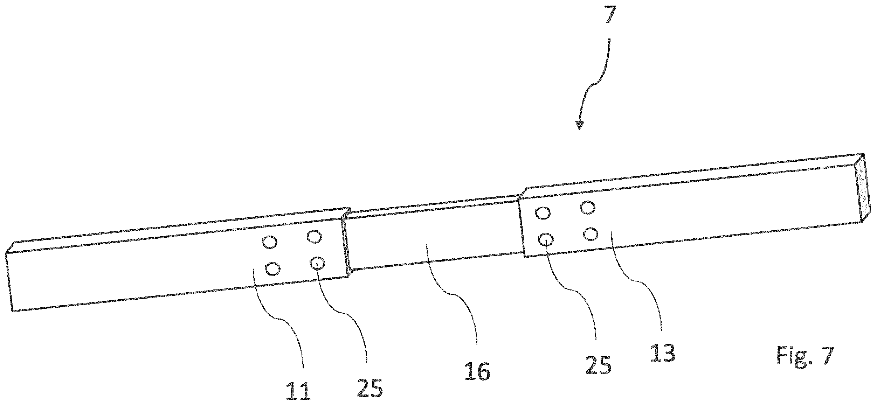

Figur 7 zeigt einen alternativen ersten Schenkel 7 eines Gelenkauslegers mit dem Zwischenstück 16. Das Zwischenstück 16 ist an einem ersten endseitigen Bereich teilweise in den ersten Abschnitt 11 eingeführt und an einem zweiten endseitigen Bereich teilweise in den zweiten Abschnitt 13 eingeführt. Das Zwischenstück 16 ist mit dem ersten Abschnitt 11 und dem zweiten Abschnitt 13 starr verbunden.

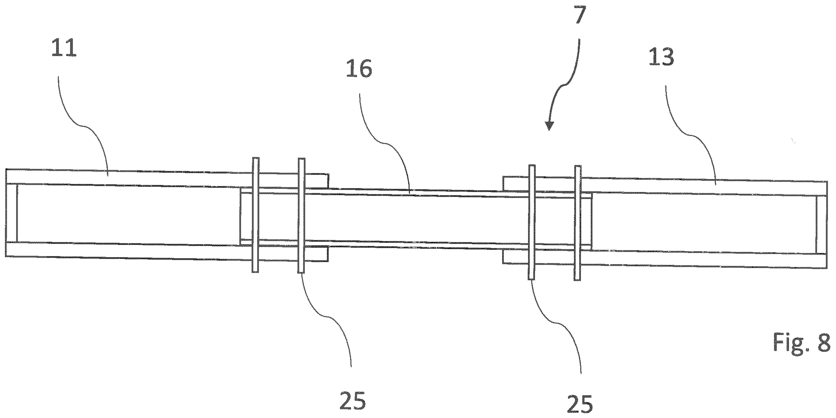

Wie in der Figur 8 gezeigt, sind im Unterschied zum ersten Schenkel 7 nach der Figur 2 die in den ersten Abschnitt 11 und in den zweiten Abschnitt 13 eingeführten endseitigen Bereiche mittels Verbindungsmitteln 25 mit dem ersten Abschnitt 11 und dem zweiten Abschnitt 13 verbunden. Als Verbindungsmittel 25 werden Schraube-Mutter-Verbindungen oder dergleichen verwendet.

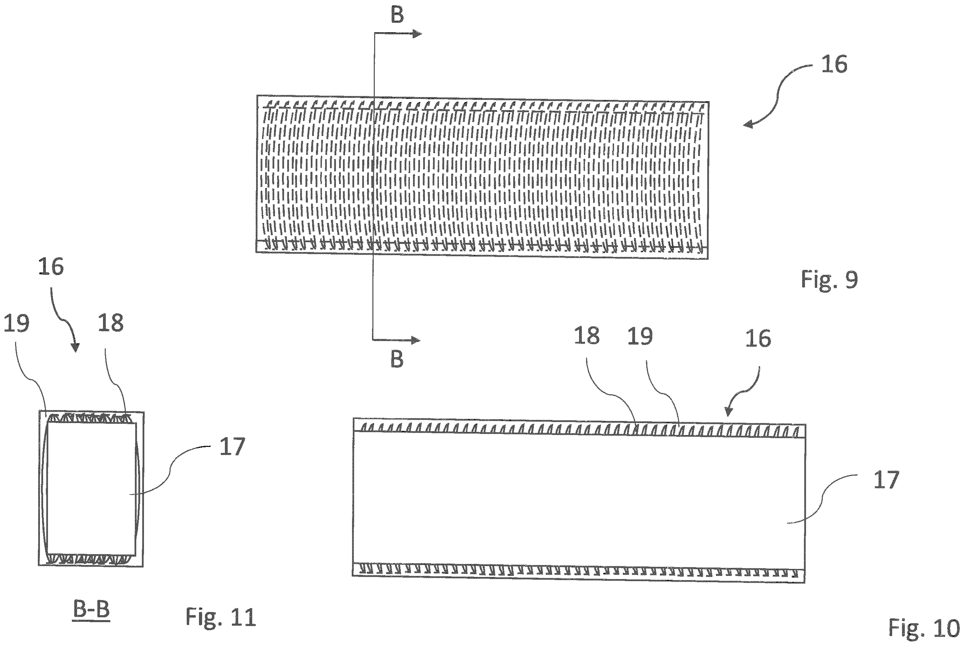

In der Figur 9 ist das Zwischenstück 16 gezeigt. Glasfasern und ein von den Glasfasern ummantelter bzw. umwickelter Kern sind als gestrichelte Linien dargestellt, da sie in der Ansicht nicht sichtbar sind.

In Figur 10 ist ein Längsschnitt durch das Zwischenstück 16 gezeigt. Das Zwischenstück 16 umfasst den Kern 17, der von den Glasfasern 18 umwickelt ist, wobei die Glasfasern 18 mit einer Kunststoffmatrix 19 vergossen sind. Mit anderen Worten bilden die Glasfasern 18, die mit der Kunststoffmatrix 19 vergossen sind, einen glasfaserverstärkten Kunststoff (GFK) aus. Figur 11 zeigt einen Schnitt B-B aus der Figur 10.

Ein Ziehen und damit ein Entfernen des Kerns 17 aus dem Zwischenstück 16 kann nach einem erfolgreichen Umwickeln des Kerns 17 mit den Glasfasern 18 und einem anschließenden Vergießen der Kunststoffmatrix 19 bedarfsweise erfolgen. Der Kern 17 kann aus Schaumglas, Schaumglasplatten oder dergleichen bestehen.

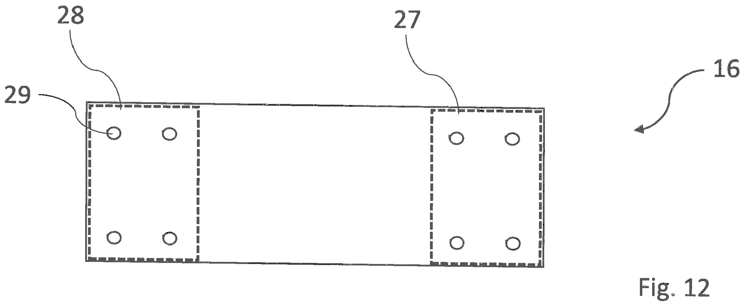

Wie in der Figur 12 gezeigt, ist es möglich, Verstärkungsplatten oder - bleche 27, 28 in das Zwischenstück 16 einzubringen oder am Zwischenstück 16 anzubringen. Dabei können die Verstärkungsplatten oder - bleche 27, 28 auf die mittels der Kunststoffmatrix vergossenen Glasfasern aufgesetzt werden oder vor dem Umwickeln mit den Glasfasern auf dem Kern des Zwischenstücks aufgesetzt werden. Durch die gezeigten Bohrungen 29 ist es möglich eine Verschraubung zu gewährleisten.

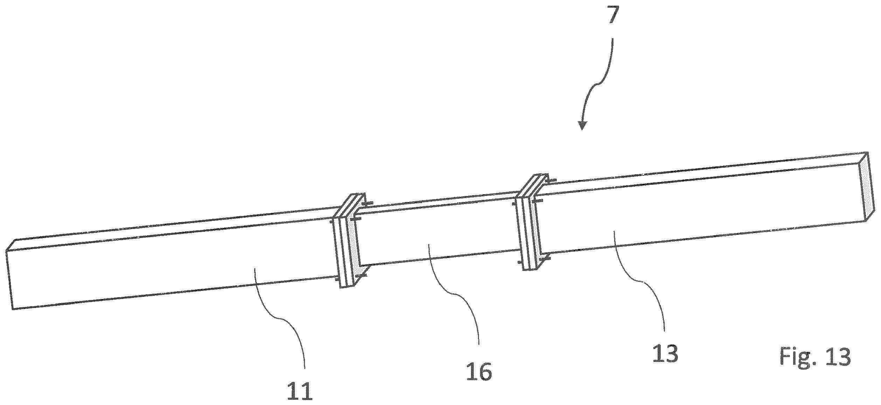

Figur 13 zeigt eine weitere alternative Ausführungsform des ersten Schenkels 7 eines Gelenkauslegers. Im Unterschied zu den beiden vorherigen Ausführungsformen gemäß Figur 2 und Figur 7 erfolgt kein Einschieben des Zwischenstücks in den ersten Abschnitt 12 und den zweiten Abschnitt 13.

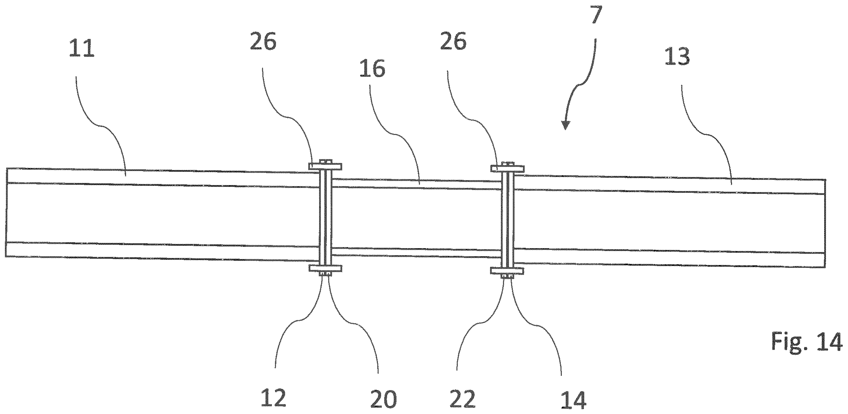

Vielmehr weist das Zwischenstück 16 an einem ersten Ende einen ersten Flansch 20 und an einem zweiten Ende einen zweiten Flansch 22 auf, wie in der Figur 14 gezeigt. Der erste Abschnitt 11 weist einen dritten Flansch 12 und der zweite Abschnitt 13 weist einen vierten Flansch 14 auf. Dabei ist der erste Flansch 20 mit dem dritten Flansch 12 und der zweite Flansch 22 mit dem vierten Flansch 14 kraftschlüssig verbunden. Als Verbindungsmittel 26 können Schraube-Mutter-Verbindungen oder dergleichen verwendet werden. Sämtliche Flansche 12, 14 und 20, 22 sind aus Metall, insbesondere Stahl.

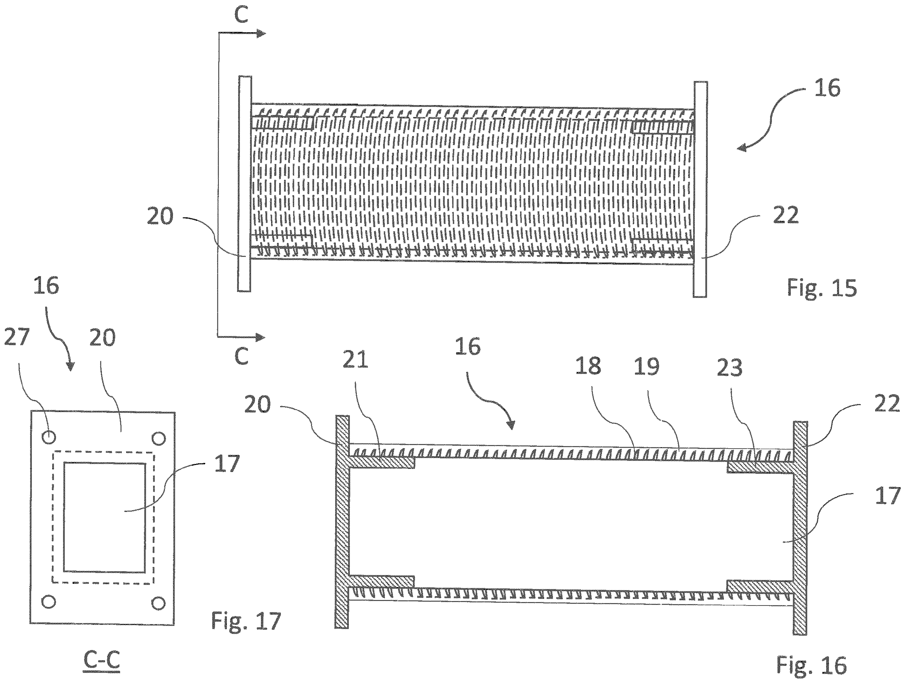

In der Figur 15 ist das Zwischenstück 16 gezeigt. Glasfasern und ein von den Glasfasern ummantelter bzw. umwickelter Kern und Stege der Flansche 20, 22 sind als gestrichelte Linien dargestellt, da sie in der Ansicht nicht sichtbar sind.

Wie in der Figur 16 gezeigt, umfasst der erste Flansch 20 erste Stege 21 und der zweite Flansch 22 zweite Stege 23. Der erste Flansch 20 und der zweite Flansch 22 sind jeweils endseitig am Kern 17 angeordnet, aufgesetzt bzw. aufgesteckt. Die Stege 21, 23 werden in eine Vertiefung, Aussparung oder Ausnehmung des Kerns 17 eingebracht. Neben dem Kern 17 sind auch die Stege 21, 23 der Flansche 20, 22 von den Glasfasern 18 umwickelt, wobei die Glasfasern 18 mit einer Kunststoffmatrix 19 vergossen sind. Mit anderen Worten bilden die Glasfasern 18, die mit der Kunststoffmatrix 19 vergossen sind, einen glasfaserverstärkten Kunststoff (GFK) aus.

Figur 17 zeigt einen Schnitt C-C aus der Figur 16. Der erste Flansch 20 weist Bohrungen bzw. Öffnungen 27 auf. Die Bohrungen bzw. Öffnungen 27 befinden sich am ersten Flansch 20, am zweiten Flansch 22 sowie an dem dritten Flansch 12 des ersten Abschnitts 11 und dem vierten Flansch 14 des zweiten Abschnitts 13. Die Verbindungsmittel 26 sind durch die Bohrungen bzw. Öffnungen 27 eingebracht bzw. anbringbar.

Konstruktionsbedingt ist ein Ziehen des Kerns 17, der aus Schaumglas, Schaumglasplatten oder dergleichen bestehen kann, nicht möglich.

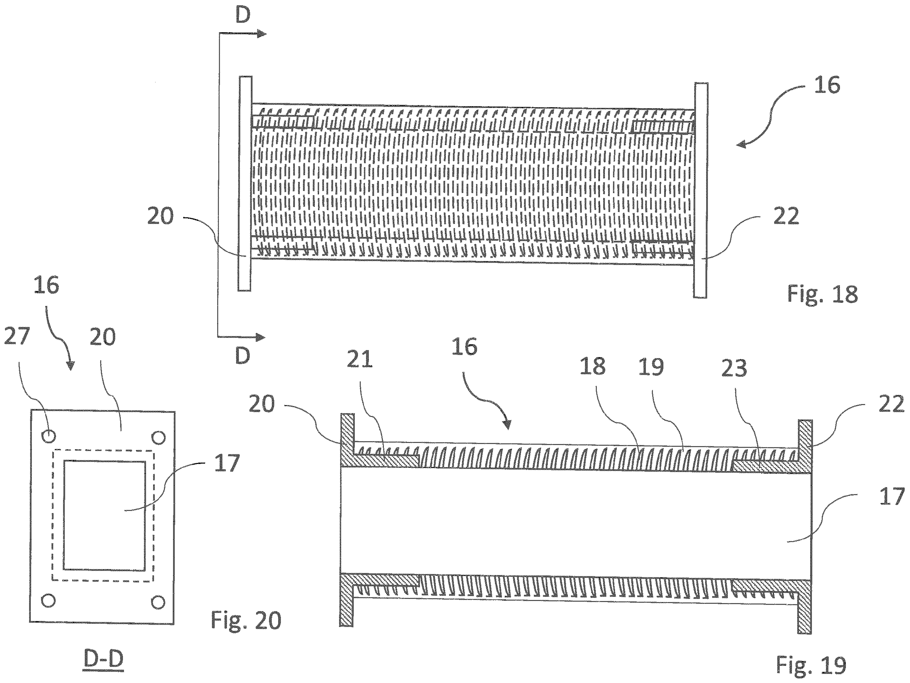

Im Unterschied zu den Figuren 15 bis 17 sind die Stege 21, 23 in den Figuren 18 bis 20 direkt auf der Mantelfläche des Kerns 17 angeordnet, ohne dass im Kern 17 eine Vertiefung für die Stege 21, 23 ausgebildet werden muss, wie bspw. in der Fig. 19 gezeigt.

Infolge dieser Anordnung der Stege 21, 23 und damit der Flansche 20, 22 ist es möglich, den Kern 17 nach einem erfolgreichen Umwickeln mit den Glasfasern 18 und einem anschließenden Vergießen der Kunststoffmatrix 19, bedarfsweise aus dem Zwischenstück 16 zu ziehen und damit aus dem Zwischenstück 16 zu entfernen. Der Kern 17 kann aus Schaumglas, Schaumglasplatten oder dergleichen bestehen.

Ein Verfahren zur Herstellung des Zwischenstücks 16 für den ersten Schenkel 7 des Gelenkauslegers 10 kann nachfolgende Schritte umfassen:
- Umwickeln des Kerns 17 mit Glasfasern 18 und
- Vergießen der Glasfasern 18 mit der Kunststoffmatrix 19.

Ein weiteres Verfahren zur Herstellung des Zwischenstücks 16 für den ersten Schenkel 7 des Gelenkauslegers 10 kann nachfolgende Schritte umfassen:
- endseitiges Aufsetzen jeweils einer der Flansche 20, 22 auf den Kern 17, wobei die Flansche 20, 22 die Stege 21, 23 aufweisen,
- Umwickeln des Kerns und der Stege mit den Glasfasern 18 und
- Vergießen der Glasfasern mit einer Kunststoffmatrix 19.

Durch das Vorsehen des elektrisch isolierenden Zwischenstücks 16 ist es möglich Arbeiten mit einer Arbeitsmaschine 1 in der Nähe von Spannungs- bzw. Hochspannungsleitungen auszuführen, ohne das die Arbeitsmaschine bedienende Personal zu gefährden und ohne die Arbeitsmaschine zu beschädigen, sollte der Gelenkausleger der Arbeitsmaschine mit den Leitungen in Kontakt geraten.

### Bezugszeichenliste

- 1: Arbeitsmaschine
- 2: Oberwagen
- 3: Unterwagen
- 4: Fahrerkabine
- 5: Hubarm
- 6: Hub- und Stielzylinder
- 10: Gelenkausleger
- 11: Abschnitt
- 12: Flansch
- 13: Abschnitt
- 14: Flansch
- 16: Zwischenstück
- 17: Kern
- 18: Glasfasern
- 19: Matrix
- 20: Flansch
- 21: Steg
- 22: Flansch
- 23: Steg
- 24: Klebeverbindung
- 25: Verbindungsmittel
- 26: Verbindungsmittel
- 27: Verstärkungsblech
- 28: Verstärkungsblech
- 29: Bohrung
- 30: Fällgreifer

## Patentansprüche

1. Gelenkausleger (10), insbesondere für eine Arbeitsmaschine (1), mit zwei Schenkeln (7, 8), wobei mindestens einer der Schenkel (7, 8) einen ersten Abschnitt (11), einen zweiten Abschnitt (13), und ein den ersten Abschnitt (11) mit dem zweiten Abschnitt (13) verbindendes elektrisch isolierendes Zwischenstück (16) umfasst, das mit dem ersten Abschnitt (11) und dem zweiten Abschnitt (13) starr verbunden ist, wobei das Zwischenstück (16) Glasfasern (18) umfasst, die mit einer Kunststoffmatrix (19) vergossen sind, **dadurch gekennzeichnet, dass** das Zwischenstück (16) an einem ersten Ende einen ersten Flansch (20) und an einem zweiten Ende einen zweiten Flansch (22) aufweist, wobei der erste Abschnitt (11) einen dritten Flansch (12) und der zweite Abschnitt (13) einen vierten Flansch (14) aufweist, und wobei der erste Flansch (20) mit dem dritten Flansch (12) und der zweite Flansch (22) mit dem vierten Flansch (14) kraftschlüssig verbunden ist.

2. Gelenkausleger (10) nach Anspruch 1, wobei das Zwischenstück (16) einen Kern (17) umfasst, der von den Glasfasern (18) umwickelt ist.

3. Gelenkausleger (10) nach Anspruch 1 oder 2, wobei der erste Flansch (20) erste Stege (21) und der zweite Flansch (22) zweite Stege (23) umfassen, wobei der erste Flansch (20) und der zweite Flansch (22) jeweils endseitig am Kern (17) nach Anspruch 2 angeordnet sind, und wobei neben dem Kern (17) auch die Stege (21, 23) der Flansche (20, 22) von den Glasfasern (18) umwickelt sind.

4. Gelenkausleger (10) nach einem der Ansprüche 1 bis 3, wobei der Kern (16) aus Schaumglas besteht und eine Rohdichte im Bereich von 100 bis 165 kg/m³ hat.

5. Gelenkausleger (10) nach einem der vorherstehenden Ansprüche, wobei die Kunststoffmatrix (19) Duroplaste, Thermoplaste und/oder Elastomere umfasst.

6. Arbeitsmaschine (1), insbesondere Holzvollernter, umfassend einen Gelenkausleger (10) nach einem der vorherstehenden Ansprüche 1 bis 5.

7. Arbeitsmaschine (1) nach Anspruch 6, weiter umfassend einen Fällgreifer (30), wobei der Fällgreifer (30) am Gelenkausleger (10) angeordnet ist.

## Claims

1. An articulated boom (10), in particular for a machine (1), having two limbs (7, 8), wherein at least one of the limbs (7, 8) comprises a first section (11), a second section (13) and an electrically insulating connecting piece (16) which connects the first section (11) to the second section (13) and which is rigidly connected to the first section (11) and to the second section (13), said connecting piece (16) comprising glass fibers (18) which are cast with a plastic matrix (19),
**characterised in that**
the connecting piece (16) includes a first flange (20) on a first end and a second flange (22) on a second end, the first section (11) including a third flange (12) and the second section (13) including a fourth flange (14), and the first flange (20) being connected to the third flange (12) in a force-fitting manner and the second
flange (22) being connected to the fourth flange (14) in a force-fitting manner.

2. The articulated boom (10) according to claim 1, wherein the connecting piece (16) comprises a core (17) which is wrapped by the glass fibers (18).

3. The articulated boom (10) according to claim 1 or 2, wherein the first flange (20) comprises first webs (21) and the second flange (22) comprises second webs (23), the first flange (20) and the second flange (22) each being disposed at the end of the core (17) according to claim 2, and the webs (21, 23) of the flanges (20, 22) also being wrapped by the glass fibers (18) in addition to the core (17).

4. The articulated boom (10) according to any one of claims 1 to 3, wherein the core (16) consists of foam glass and has a gross density in the range of 100 to 165 kg/m³.

5. The articulated boom (10) according to any one of the preceding claims, wherein the plastic matrix (19) comprises thermosetting materials, thermoplastics and/or elastomers.

6. A machine (1), in particular a forest harvester, comprising an articulated boom (10) according to any one of the preceding claims 1 to 5.

7. The machine (1) according to claim 6, further comprising a felling head (30), wherein the felling head (30) is disposed at the articulated boom (10).

## Revendications

1. Flèche articulée (10), notamment pour une machine de travail (1), avec deux branches (7, 8), au moins une des branches (7, 8) comprenant une première partie (11), une deuxième partie (13) et une pièce intermédiaire (16) qui est électriquement isolante et relie la première partie (11) à la deuxième partie (13) et qui est reliée de manière rigide à la première partie (11) et à la deuxième partie (13), ladite pièce intermédiaire (16) comprenant des fibres de verre (18) qui sont coulées avec une matrice en matière plastique (19), **caractérisée en ce que** la pièce intermédiaire (16) présente une première bride (20) à une première extrémité et une deuxième bride (22) à une deuxième extrémité, la première partie (11) présentant une troisième bride (12) et la deuxième partie (13) présentant une quatrième bride (14), et la première bride (20) étant reliée à la troisième bride (12) par force et la deuxième bride (22) étant reliée à la quatrième bride (14) par force.

2. Flèche articulée (10) selon la revendication 1, dans laquelle la pièce intermédiaire (16) comprend un noyau (17) qui est enroulé par les fibres de verre (18).

3. Flèche articulée (10) selon la revendication 1 ou 2, dans laquelle la première bride (20) comprend des premières nervures (21) et la deuxième bride (22) comprend des deuxièmes nervures (23), la première bride (20) et la deuxième bride (22) étant disposées chacune à une extrémité du noyau (17) selon la revendication 2, et dans laquelle, outre le noyau (17), les nervures (21, 23) des brides (20, 22) sont également enveloppées par les fibres de verre (18).

4. Flèche articulée (10) selon l'une quelconque des revendications 1 à 3, dans laquelle le noyau (16) est en verre cellulaire et a une masse volumique apparente comprise entre 100 et 165 kg/m³.

5. Flèche articulée (10) selon l'une quelconque des revendications précédentes, dans laquelle la matrice plastique (19) comprend des thermodurcissables, des thermoplastiques et/ou des élastomères.

6. Machine de travail (1), notamment une récolteuse de bois, comprenant une flèche articulée (10) selon l'une quelconque des revendications 1 à 5 précédentes.

7. Machine de travail (1) selon la revendication 6, comprenant en outre un grappin d'abattage (30), le grappin d'abattage (30) étant disposé sur le bras articulé (10).
